# EUROPEAN PATENT APPLICATION

(11) **EP 4 610 825 A1**
(43) Date of publication of application: **03.09.2025**
(21) Application number: 23882493.2
(22) Date of filing: 17.10.2023
(51) Int. Cl.: G06F 9/50, B60W 50/023, B60W 50/04, G06F 11/20

(54) **REDUNDANCY SETTING FOR CENTRAL BRAIN CONTROL**

(30) Priority: 27.10.2022 JP 2022172447
(71) Applicant: SoftBank Group Corp., Tokyo 105-7537 (JP)
(72) Inventor: SON Masayoshi, Tokyo 105-7537 (JP)
(74) Representative: DREISS Patentanwälte PartG mbB
(86) International application number: PCT/JP2023/037522
(87) International publication number: WO 2024/090288

(57) **Abstract**

Provided is a control apparatus including a control unit having a plurality of internal chips arranged therein, a plurality of external chips arranged outside the control unit, a number of the plurality of external chips being lower than that of the plurality of internal chips, and a management unit which manages control of a vehicle by the control unit, in which the management unit performs management in a manner that the control of the vehicle using the plurality of external chips is executed in response to the control unit having met a predetermined condition. A first number of the external chips may be arranged outside the control unit, and a number of the internal chips may be arranged inside the control unit, the number being obtained by subtracting the first number from a theoretical value of a number of chips of the control unit.

## Description

### BACKGROUND

### 1. TECHNICAL FIELD

The present invention relates to redundancy setting for central brain control for controlling ultra high performance automated driving.

### 2. RELATED ART

Patent Document 1 describes a vehicle having an automated driving function.

### Prior Art Documents

### Patent document

Patent Document 1: Japanese Patent Application Publication No. 2022-035198

### General Disclosure

According to an embodiment of the present invention, a control apparatus which controls a vehicle is provided. The control apparatus may include a control unit having a plurality of internal chips arranged therein. The control apparatus may include a plurality of external chips arranged outside the control unit, a number of the plurality of external chips being lower than that of the plurality of internal chips. The control apparatus may include a management unit which manages control of a vehicle by the control unit. The management unit may perform management in a manner that the control of the vehicle using the plurality of external chips is executed in response to the control unit having met a predetermined condition.

In the control apparatus, a first number of the external chips may be arranged outside the control unit, and a number of the internal chips may be arranged inside the control unit, the number being obtained by subtracting the first number from a theoretical value of a number of chips of the control unit.

In any of the control apparatuses, the management unit may perform the management in a manner that the control of the vehicle using the plurality of external chips is executed in response to a determination that the control unit does not function due to heavy load.

In any of the control apparatuses, the management unit may perform the management in a manner that the control of the vehicle further using the plurality of external chips is executed in response to a determination that computational power of the control unit is insufficient when the control of the vehicle by the control unit is executed.

In any of the control apparatuses, the management unit may perform the management in a manner that the control of the vehicle using the plurality of external chips is started in a case where a failure occurs in the control unit when the control of the vehicle by the control unit is executed.

Note that the above summary clause of the invention does not necessarily describe all necessary features of the embodiments of the present invention. The present invention may also be a sub-combination of the features described above.

### BRIEF DESCRIPTION OF THE DRAWINGS

Fig. 1 schematically illustrates a danger prediction ability of Al in ultra high performance automated driving.
Fig. 2 schematically illustrates a central brain in the ultra high performance automated driving.
Fig. 3 schematically illustrates an example of a configuration of a control apparatus 100.
Fig. 4 schematically illustrates perfect speed control.
Fig. 5 schematically illustrates perfect bell curves.
Fig. 6 is an overview diagram of perfect cruising.
Fig. 7 is an overview diagram of the perfect cruising.
Fig. 8 is an overview diagram of the perfect cruising.
Fig. 9 is an overview diagram of the perfect cruising.
Fig. 10 is an overview diagram of the perfect cruising.
Fig. 11 is an overview diagram of the perfect cruising.
Fig. 12 is an overview diagram of the perfect cruising.
Fig. 13 schematically illustrates an example of hardware configuration of a computer 1200 that functions as a control apparatus 100.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

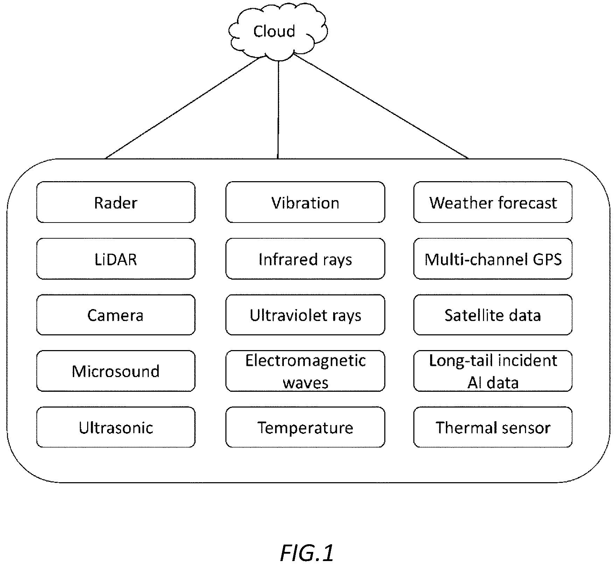

Fig. 1 schematically illustrates a danger prediction ability of Al in ultra high performance automated driving according to the present embodiment. In the present embodiment, multiple types of sensor information are converted into Al data to be accumulated in a cloud. AI predicts and determines a best mix of conditions for every nanosecond to optimize a vehicle operation.

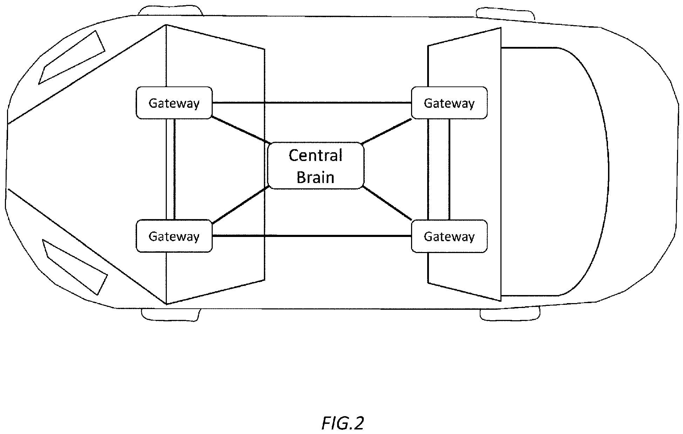

Fig. 2 schematically illustrates a central brain in the ultra high performance automated driving.

Examples of a sensor used in the present embodiment include radar, LiDAR, a high pixel, telephoto, ultra wide angle, 360-degree, high performance camera, vision recognition, microsound, ultrasonic, vibration, infrared rays, ultraviolet rays, electromagnetic waves, a temperature, a humidity, spot AI weather forecast, high precision multi-channel GPS, low altitude satellite information, long tail incident Al data, and the like. The long tail incident Al data is trip data of a Level 5 implemented automobile.

Examples of sensor information taken from multiple types of sensors include body weight gravity center movement, road material sensing, outside air temperature sensing, outside air humidity sensing, up, down, lateral, and diagonal inclination slope angle sensing, road icing manner, water content sensing, sensing of materials, wearing conditions, and air pressures of respective tires, road widths, presence or absence of overtaking prohibition, oncoming vehicles, vehicle model information of front and rear vehicles, cruising states of those vehicles, surrounding conditions (such as a bird, an animal, a soccer ball, a vehicle involved in an accident, an earthquake, housework, wind, typhoon, heavy rain, shower, snow storm, fog, and the like), and in the present embodiment, sensing of these is implemented every nanosecond.

In the present embodiment, the central brain may execute, from these pieces of information, matching with most correctly predicted weather forecast for each smallest spot based on the entire road + Al. The central brain may execute, from these pieces of information, matching with position information of another vehicle. The central brain may execute, from these pieces of information, matching with a best estimated vehicle model (matching with a remaining amount on its way and a speed for every nanosecond). The central brain may execute, from these pieces of information, matching with a mood such as music to which a passenger listens. The central brain may execute, from these pieces of information, instantaneous reconfiguration of conditions when the mood of the desire changes.

The central brain may upload the Al data to the cloud when the vehicle is charged, for example. A data lake is formed to be analyzed by Al and regularly uploaded up to date.

The central brain may use both a software aspect and a hardware aspect as a method to optimize the travel of the vehicle. On the software aspect, the central brain performs best mix of all of the information accumulated in the cloud and the automobile sensor information by Al to be determined by Al every nanosecond to achieve automated driving meeting the desire of the passenger. On the hardware aspect, the vehicle performs micro control on a motor rotation output every 1/1 billion second (nanosecond). The vehicle includes electricity and a motor that enable communication and control in nanosecond. According to the central brain, since Al foresees an emergency, perfect stop is possible without needs for braking and without spilling a glass of water. In addition, power consumption is low, and brake friction does not occur.

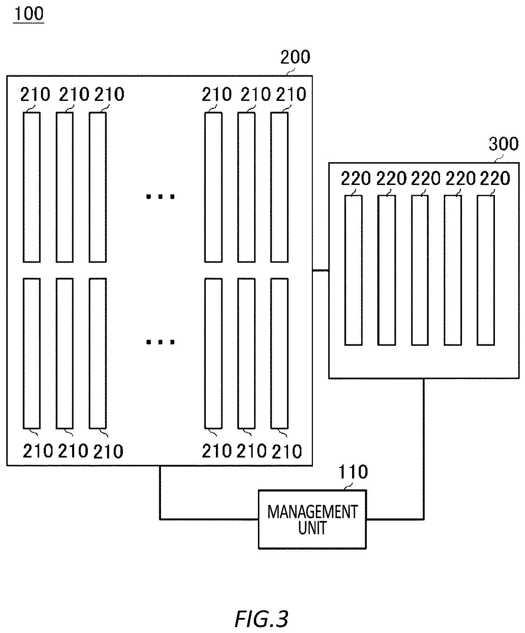

Fig. 3 schematically illustrates an example of a configuration of a control apparatus 100. The control apparatus 100 executes control of the vehicle. The control apparatus 100 executes automated driving control of the vehicle, for example.

The control apparatus 100 includes a control unit 200. The control unit 200 may be the central brain.

A plurality of internal chips 210 are arranged inside the control unit 200. The internal chip 210 may be a so-called monster chip. The plurality of internal chips 210 acquire information from multiple types of sensors and execute processing to control automated driving of the vehicle by using the acquired information.

In the control apparatus 100 according to the present embodiment, furthermore, a plurality of external chips 220 are arranged outside the control unit 200. The control apparatus 100 includes a number of the external chips 220, the number being lower than that of the plurality of internal chips 210 arranged inside the control unit 200. The external chip 220 may be a so-called monster chip. In the example illustrated in Fig. 3, the plurality of external chips 220 are arranged inside an external unit 300, but the arrangement of the external chips 220 is not limited to this, and the external chips 220 may be arranged at any locations as long as the locations are outside the control unit 200. In the example illustrated in Fig. 3, the control unit 200 and the external unit 300 are connected by a wire, but the configuration is not limited to this, and the external unit 300 may be directly installed outside the control unit 200.

The control apparatus 100 includes a management unit 110 which manages control of the vehicle. For example, under normal circumstances, the management unit 110 manages the control unit 200 such that the control of the vehicle by the control unit 200 is executed, and performs management in a manner that the control of the vehicle using the plurality of external chips 220 is executed in response to the control unit 200 having met a predetermined condition.

For example, in response to the control unit 200 having met the predetermined condition, the management unit 110 manages the plurality of internal chips 210 and the plurality of external chips 220 such that the control of the vehicle using the plurality of external chips 220 in addition to the plurality of internal chips 210 is executed. For example, in response to the control unit 200 having met the predetermined condition, the management unit 110 manages the plurality of external chips 220 such that the control of the vehicle using the plurality of external chips 220 is executed without using the plurality of internal chips 210.

The predetermined condition may be a condition which is to be met when it is determined that the control unit 200 does not function due to heavy load. The management unit 110 may perform the management in a manner that, in response to the determination that the control unit 200 does not function due to the heavy load, the control of the vehicle using the plurality of external chips 220 is executed.

The predetermined condition may be a condition which is to be met when it is determined that computational power of the control unit 200 is insufficient. The management unit 110 may perform the management in a manner that, in response to the determination that the computational power of the control unit 200 is insufficient when the control of the vehicle by the control unit 200 is executed, the control of the vehicle further using the plurality of external chips 220 in addition to the plurality of internal chips 210 is executed.

The predetermined condition may be a condition which is to be met when it is determined that a failure occurs in the control unit 200. The management unit 110 may perform the management in a manner that, in a case where the failure occurs in the control unit 200 when the control of the vehicle by the control unit 200 is executed, the control of the vehicle using the plurality of external chips 220 is started.

The number of the internal chips 210 and the number of the external chips 220 may be decided based on a theoretical value of a number of chips of the control unit 200. The theoretical value of the number of chips of the control unit 200 may be a number that theoretically becomes necessary upon processing for the control unit 200 to control the vehicle.

For example, a number of internal chips 210 are arranged inside the control unit 200, the number being obtained by subtracting N from the theoretical value of the number of chips of the control unit 200, and N external chips 220 are arranged outside the control unit 200. For example, under normal circumstances, the management unit 110 may manage the plurality of internal chips 210 and the plurality of external chips 220 such that the control of the vehicle using the plurality of internal chips 210 and the plurality of external chips 220 is executed, and manages the plurality of external chips 220 such that the control of the vehicle using only the plurality of external chips 220 out of the plurality of internal chips 210 and the plurality of external chips 220 is executed in response to the control unit 200 having met the predetermined condition. As a specific example, when the control of the vehicle using the plurality of internal chips 210 and the plurality of external chips 220 is executed, in a case where the control unit 200 suffers heavy load or a failure occurs in the control unit 200, the management unit 110 manages the plurality of external chips 220 such that the control of the vehicle using only the plurality of external chips 220 is executed.

As one specific example, when the theoretical value of the number of chips of the control unit 200 is 60, the control apparatus 100 includes 55 internal chips 210 and five external chips 220. When the internal chip 210 and the external chip 220 are so-called monster chips, with as few as five chips, minimum travelling control necessary for travelling is possible. Accordingly, even if the failure occurs in the control unit 200 or the control unit 200 is unable to continue the processing due to the heavy load, loss of the control of the vehicle can be avoided. With this configuration, the vehicle control can be performed for safe automated driving.

In addition, for example, a number of the internal chips 210 that is the theoretical value of the number of chips of the control unit 200 may be arranged inside the control unit 200, and a number of the external chips 220 that is lower than the number of the theoretical value may be arranged outside the control unit 200. As a specific example, in response to a determination that the computational power of the control unit 200 is insufficient when the control of the vehicle using the plurality of internal chips 210 is executed, the management unit 110 manages the plurality of external chips 220 such that the control of the vehicle by further using the plurality of external chips 220 in addition to the plurality of internal chips 210 is executed. As one specific example, when the theoretical value of the number of chips of the control unit 200 is 60, the control apparatus 100 includes 60 internal chips 210 and five external chips 220. With this configuration, under normal circumstances, the automated driving is controlled with only the 60 internal chips 210, and when the computational power is insufficient with only the 60 internal chips 210, the computational power can be compensated by further using the five external chips 220. With this configuration, the vehicle control can be performed for the safe automated driving.

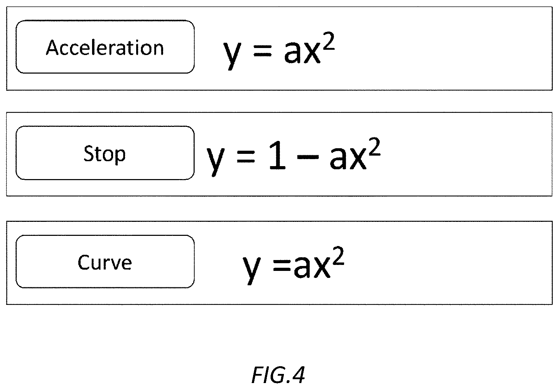

Fig. 4 schematically illustrates perfect speed control achieved through control by the control apparatus according to the present embodiment. A principle illustrated in Fig. 4 is an indicator to calculate a braking distance of the vehicle, which is controlled by this basic equation. In the system according to the present embodiment, since ultra high performance input data is present, the calculation can be performed with clean bell curves.

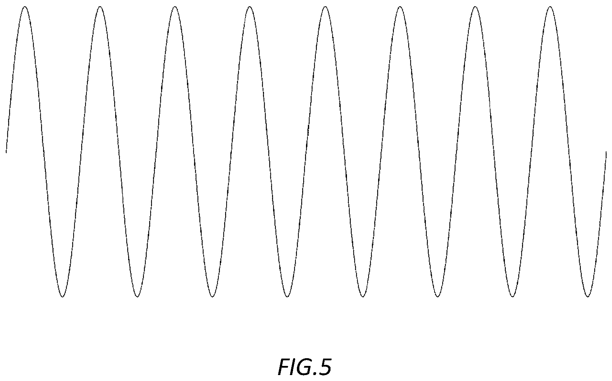

Fig. 5 schematically illustrates perfect bell curves achieved through the control by the control apparatus according to the present embodiment.

1 million TOPS can be achieved as a computing speed when the ultra high performance automated driving is achieved.

As described above, in the present embodiment, the control apparatus may achieve perfect cruise control. The control apparatus may execute control according to a preference of an occupant riding in the vehicle. Examples of the preference of the occupant include "a shortest period of time", "a longest remaining battery life", "wanting to avoid vehicle sickness most of all", "wanting to feel G most of all (safely)", "wanting to feel a landscape most of all with a mix of the above and the like", "wanting to feel a different landscape from the last time", "for example, wanting to trace memories of a road coming down with someone some years ago", "wanting to minimize a probability of an accident most of all", and the like, and the control apparatus discusses various other conditions with the passenger. The control apparatus executes perfect mix with the vehicle based on a number of passengers, a weight, a location, body weight gravity center movement (calculated every nanosecond), sensing of the road material for every nanosecond, sensing of the outside air humidity for every nanosecond, sensing of the outside air humidity for every nanosecond, and the above-described condition selections in total for every nanosecond.

The control apparatus may take into account or execute "the up, down, lateral, and diagonal inclination slope angles of the road", "matching with the most correctly predicted weather forecast for each smallest spot by Al on its entire way", "matching with the position information of another vehicle for every nanosecond", "matching with the best estimated vehicle model of those (the remaining amount on its way and the speed for every nanosecond matching)", "matching with the mood such as the music to which the passenger listens", "the instantaneous reconfiguration of the conditions when the mood of the desire changes", "the estimation of the optimal mix with the remaining road and the road icing manner, the water content, and the material wearing and the air pressure of each of the four, two, eight, or 16 tires or the like for that every nanosecond", "the lane width, the angle, and whether or not this is a no-overtaking lane of the road at that time", "the vehicle models in the opposite lane and the front and rear lanes and the cruising states of the vehicles (for every nanosecond)", and "the best mix of all other conditions".

Positions to take within the width of each lane are all different instead of being in the middle. The positions depend on the speed, the angle, and the road information at the time. For example, best probability inference matching of a flying bird, an animal, an oncoming vehicle, a soccer ball that comes flying in, a child, a vehicle involved in an accident, an earthquake, fire, wind, typhoon, heavy rain, shower, snow storm, fog, and other nanosecond-by-nanosecond impacts is executed.

Perfect matching of capabilities of a current version of the control apparatus and the latest updated cloud accumulated up to that time point is executed.

This may be defined as perfect cruising in the ultra high performance automated driving. For this reason, in the ultra high performance automated driving, 1 million TOPS requires a best battery power management and a temperature AI synchronized burst chilling function at that time.

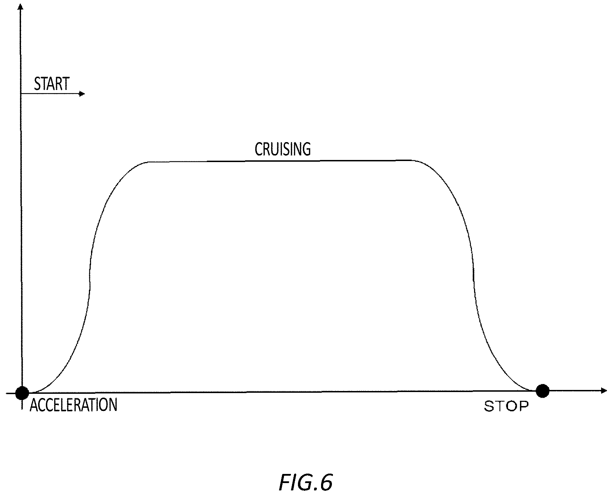

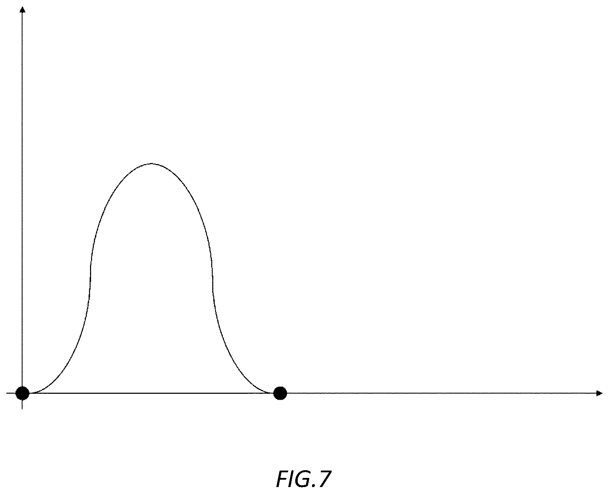

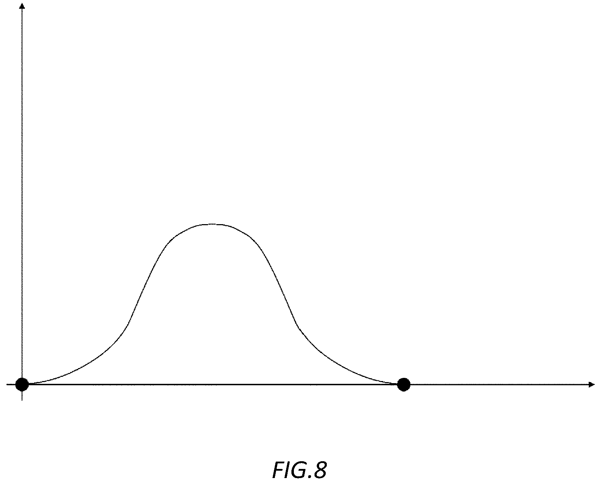

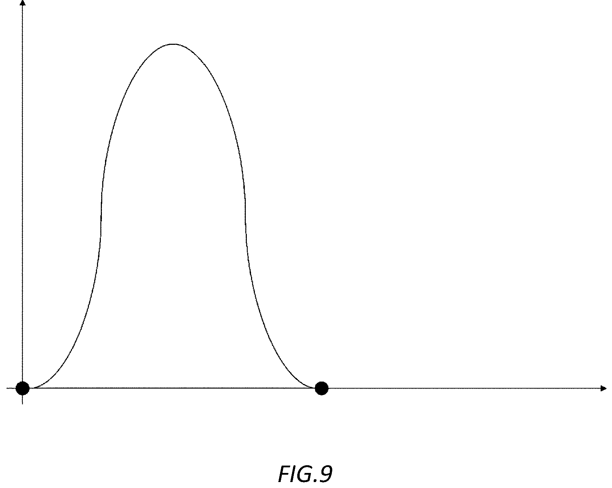

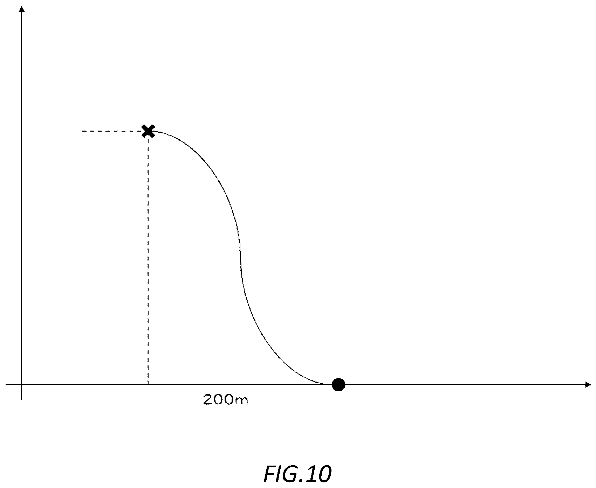

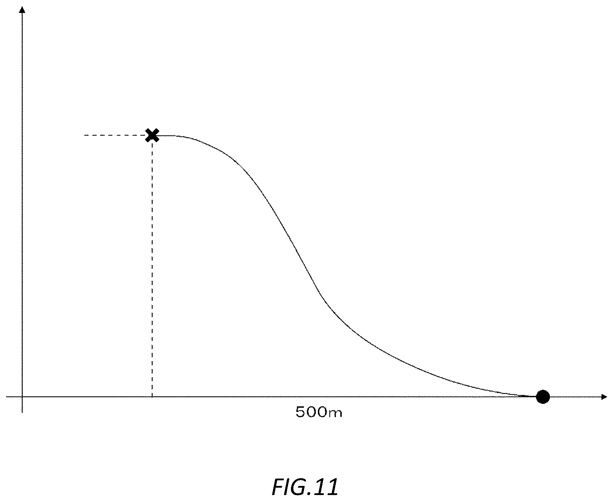

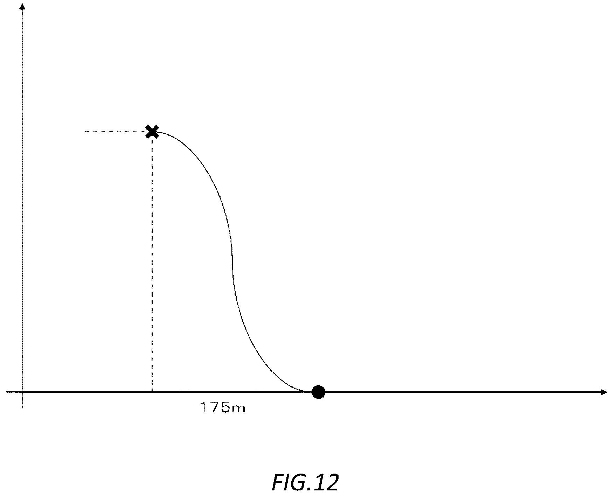

Fig. 6, Fig. 7, Fig. 8, Fig. 9, Fig. 10, Fig. 11 and Fig. 12 are overview diagrams of the perfect cruising.

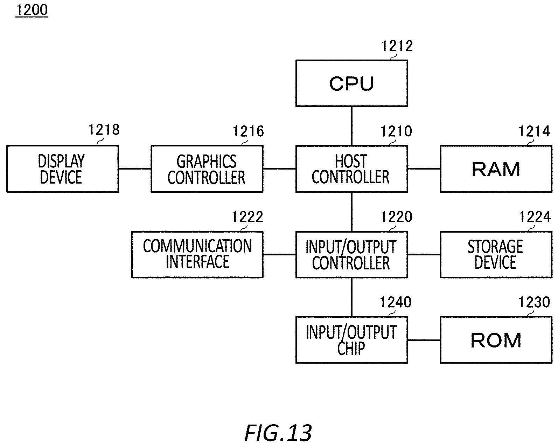

Fig. 13 schematically illustrates an example of a hardware configuration of a computer 1200 that functions as the control apparatus 100. A program installed in the computer 1200 can cause the computer 1200 to function as one or more "units" of an apparatus according to the present embodiment, or cause the computer 1200 to perform operations associated with the apparatus or perform one or more "units" thereof according to the present embodiment, and/or cause the computer 1200 to perform the process according to the present embodiment or perform the steps of the process. Such a program may be executed by a CPU 1212 to cause the computer 1200 to perform particular operations associated with some or all of the blocks in the flowcharts and block diagrams described in the present specification.

The computer 1200 according to the present embodiment includes the CPU 1212, a RAM 1214, and a graphics controller 1216, which are connected to each other via a host controller 1210. The computer 1200 also includes input/output units such as a communication interface 1222, a storage device 1224, a DVD drive and an IC card drive, which are connected to the host controller 1210 via an input/output controller 1220. The DVD drive may be a DVD-ROM drive, a DVD-RAM drive, etc. The storage device 1224 may be a hard disk drive, a solid-state drive, and the like. The computer 1200 also includes a ROM 1230 and a legacy input/output unit such as a keyboard, which are connected to the input/output controller 1220 via an input/output chip 1240.

The CPU 1212 operates in accordance with the programs stored in the ROM 1230 and the RAM 1214, thereby controlling each unit. The graphics controller 1216 acquires image data which is generated by the CPU 1212 in a frame buffer or the like provided in the RAM 1214 or in itself so as to cause the image data to be displayed on a display device 1218.

The communication interface 1222 communicates with other electronic devices via a network. The storage device 1224 stores a program and data used by the CPU 1212 in the computer 1200. The DVD drive reads the programs or the data from the DVD-ROM or the like, and provides the storage device 1224 with the programs or the data. The IC card drive reads the program and data from an IC card, and/or writes the program and data to the IC card.

The ROM 1230 stores therein a boot program or the like executed by the computer 1200 at the time of activation, and/or a program depending on the hardware of the computer 1200. The input/output chip 1240 may also connect various input/output units via a USB port, a parallel port, a serial port, a keyboard port, a mouse port, or the like to the input/output controller 1220.

A program is provided by a computer readable storage medium such as the DVD-ROM or the IC card. The program is read from the computer readable storage medium, installed into the storage device 1224, RAM 1214, or ROM 1230, which are also examples of a computer readable storage medium, and executed by the CPU 1212. Information processing written in these programs is read by the computer 1200, and provides cooperation between the programs and the various types of hardware resources described above. An apparatus or method may be configured by implementing the operation or processing of information in accordance with the usage of the computer 1200.

For example, when a communication is performed between the computer 1200 and an external device, the CPU 1212 may execute a communication program loaded in the RAM 1214 and instruct the communication interface 1222 to perform communication processing based on a process written in the communication program. The communication interface 1222, under control of the CPU 1212, reads transmission data stored on a transmission buffer region provided in a recording medium such as the RAM 1214, the storage device 1224, the DVD-ROM, or the IC card, and transmits the read transmission data to a network or writes reception data received from a network to a reception buffer region or the like provided on the recording medium.

In addition, the CPU 1212 may cause all or a necessary portion of a file or a database to be read into the RAM 1214, the file or the database having been stored in an external recording medium such as the storage device 1224, the DVD drive (DVD-ROM), the IC card, etc., and perform various types of processing on the data on the RAM 1214. Next, the CPU 1212 may write the processed data back into the external recording medium.

Various types of information, such as various types of programs, data, tables, and databases, may be stored in the recording medium to undergo information processing. The CPU 1212 may execute, on the data read from the RAM 1214, various types of processing including various types of operations, information processing, conditional judgement, conditional branching, unconditional branching, information search/replacement, or the like described throughout the present disclosure and designated by instruction sequences of the programs, to write the results back to the RAM 1214. In addition, the CPU 1212 may search for information in a file, a database, or the like in the recording medium. For example, when a plurality of entries, each having an attribute value of a first attribute associated with an attribute value of a second attribute, are stored in the recording medium, the CPU 1212 may search for an entry whose attribute value of the first attribute matches a designated condition, from among the said plurality of entries, and read the attribute value of the second attribute stored in the said entry, thereby acquiring the attribute value of the second attribute associated with the first attribute that satisfies a predetermined condition.

The above described program or software modules may be stored in the computer readable storage medium on or near the computer 1200. In addition, a recording medium such as a hard disk or a RAM provided in a server system connected to a dedicated communication network or the Internet can be used as the computer readable storage medium, thereby providing the program to the computer 1200 via the network.

Blocks in flowcharts and block diagrams in the present embodiments may represent stages of processes in which operations are executed or "units" of apparatuses responsible for executing operations. A specific step and "unit" may be implemented by a dedicated circuit, a programmable circuit supplied along with a computer readable instruction stored on a computer readable storage medium, and/or a processor supplied along with the computer readable instruction stored on the computer readable storage medium. The dedicated circuit may include a digital and/or analog hardware circuit, or may include an integrated circuit (IC) and/or a discrete circuit. The programmable circuit may include, for example, a reconfigurable hardware circuit including logical AND, logical OR, logical XOR, logical NAND, logical NOR, and another logical operation, and a flip-flop, a register, and a memory element, such as a field programmable gate array (FPGA), a programmable logic array (PLA), or the like.

The computer readable storage medium may include any tangible device capable of storing an instruction executed by an appropriate device, so that the computer readable storage medium having the instruction stored thereon constitutes a product including an instruction that may be executed in order to provide means for executing an operation designated by a flowchart or a block diagram. An example of the computer readable storage medium may include an electronic storage medium, a magnetic storage medium, an optical storage medium, an electromagnetic storage medium, a semiconductor storage medium, etc. A more specific example of the computer readable storage medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disk read-only memory (CD-ROM), a digital versatile disk (DVD), a Blu-ray (registered trademark) disk, a memory stick, an integrated circuit card, or the like.

The computer readable instructions may include an assembler instruction, an instruction-set-architecture (ISA) instruction, a machine instruction, a machine-dependent instruction, a microcode, a firmware instruction, state-setting data, or either of source code or object code written in any combination of one or more programming languages including an object-oriented programming language such as Smalltalk (registered trademark), JAVA (registered trademark), and C++, or the like, and a conventional procedural programming language such as a "C" programming language or a similar programming language.

The computer readable instruction may be provided to a general purpose computer, a special purpose computer, or a processor or programmable circuit of another programmable data processing apparatus locally or via a local area network (LAN), a wide area network (WAN) such as the Internet or the like in order that the general purpose computer, the special purpose computer, or the processor or the programmable circuit of another programmable data processing apparatus executes the computer readable instruction to generate means for executing operations designated by the flowchart or the block diagram. Examples of the processor include a computer processor, a processing unit, a microprocessor, a digital signal processor, a controller, a microcontroller, and the like.

While the present invention has been described by way of the embodiments, the technical scope of the present invention is not limited to the scope described in the above-described embodiments. It is apparent to persons skilled in the art that various alterations or improvements can be added to the above-described embodiments. It is also apparent from the scope of the claims that the embodiments added with such alterations or improvements can be included in the technical scope of the present invention.

The operations, procedures, steps, stages, and the like of each process executed by an apparatus, system, program, and method shown in the claims, embodiments, or diagrams can be achieved in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be executed in this order.

### EXPLANATION OF REFERENCES

100: control apparatus; 110: management unit; 200: control unit; 210: internal chip; 220: external chip; 1200: computer; 1210: host controller; 1212: CPU; 1214: RAM; 1216: graphics controller; 1218: display device; 1220: input/output controller; 1222: communication interface; 1224: storage device; 1230: ROM; and 1240: input/output chip.

## Claims

1. A control apparatus comprising:
a control unit having a plurality of internal chips arranged therein;
a plurality of external chips arranged outside the control unit, a number of the plurality of external chips being lower than that of the plurality of internal chips; and
a management unit which manages control of a vehicle by the control unit, wherein
the management unit performs management in a manner that the control of the vehicle using the plurality of external chips is executed in response to the control unit having met a predetermined condition.

2. The control apparatus according to claim 1, wherein
a first number of the external chips are arranged outside the control unit, and
a number of the internal chips are arranged inside the control unit, the number being obtained by subtracting the first number from a theoretical value of a number of chips of the control unit.

3. The control apparatus according to claim 1, wherein the management unit performs the management in a manner that the control of the vehicle using the plurality of external chips is executed in response to a determination that the control unit does not function due to heavy load.

4. The control apparatus according to claim 1, wherein the management unit performs the management in a manner that the control of the vehicle further using the plurality of external chips is executed in response to a determination that computational power of the control unit is insufficient when the control of the vehicle by the control unit is executed.

5. The control apparatus according to claim 1, wherein the management unit manages performs the management in a manner that the control of the vehicle using the plurality of external chips is started in a case where a failure occurs in the control unit when the control of the vehicle by the control unit is executed.
